(19) Europäisches Patentamt
European Patent Office
Office européen des brevets

(11) **EP 3 502 816 B1**

(12) **FASCICULE DE BREVET EUROPEEN**

(45) Date de publication et mention
de la délivrance du brevet:
**24.11.2021 Bulletin 2021/47**

(51) Int Cl.:
***G05B 19/4097*** *(2006.01)*    ***B21D 5/14*** *(2006.01)*

(21) Numéro de dépôt: **18211885.1**

(22) Date de dépôt: **12.12.2018**

(54) **PROCÉDÉ DE RÉGLAGE D'UNE ROULEUSE À TROIS ROULEAUX**

REGULIERUNGSVERFAHREN EINER AUFROLLVORRICHTUNG MIT DREI WALZEN

METHOD FOR ADJUSTING A ROLLING MACHINE WITH THREE ROLLERS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2017 FR 1763003**

(43) Date de publication de la demande:
**26.06.2019 Bulletin 2019/26**

(73) Titulaire: **Amb Picot
69210 Lentilly (FR)**

(72) Inventeurs:
• **CONRAUD, Grégory
88000 Dogneville (FR)**
• **CAMUS, Etienne
69001 Lyon (FR)**

(74) Mandataire: **Cabinet Laurent & Charras
Le Contemporain
50 Chemin de la Bruyère
69574 Dardilly Cedex (FR)**

(56) Documents cités:
**EP-A1- 0 227 870    US-A- 5 187 959**

**Description**

**DOMAINE DE L'INVENTION**

L'invention vise un procédé de réglage d'une rouleuse à trois rouleaux, c'est-à-dire d'une installation destinée à permettre de conférer à une tôle de matériau et d'épaisseur déterminés un rayon de courbure souhaité, fonction de l'application envisagée de ladite tôle.

**ETAT ANTERIEUR DE LA TECHNIQUE**

Les rouleuses à trois rouleaux sont aujourd'hui largement connues. Leur principe de fonctionnement est le suivant : une tôle, par exemple d'acier, est introduite entre un rouleau supérieur et deux rouleaux inférieurs, la position de ces derniers étant réglable, notamment en hauteur. Plus les rouleaux inférieurs sont ajustés en position haute et plus le rayon de courbure de la tôle diminue.

L'un des problèmes techniques principaux auxquels se heurtent les utilisateurs de telles installations réside dans le phénomène de retour élastique de la tôle, après avoir subi l'étape de roulage, c'est-à-dire après avoir subi un passage entre le rouleau supérieur et les rouleaux inférieurs. Ce retour élastique est fonction bien évidemment des caractéristiques intrinsèques du matériau mis en œuvre (acier, aluminium, acier inoxydable, etc.), mais également de son épaisseur, outre des caractéristiques propres de la rouleuse en question.

A ce jour, différents moyens ont été développés pour traiter ce problème technique.

Le premier moyen consiste à opérer une correction postérieure, après réalisation d'un premier passage de la tôle dans la rouleuse. Ainsi, après un tel premier passage, et après mesure du rayon de courbure de la tôle consécutivement au retour élastique, il est possible de procéder à un nouveau réglage de l'installation afin d'obtenir le rayon de courbure souhaité. Cette correction postérieure engendre donc une consommation de temps, et en outre, engendre un gaspillage de la matière, puisqu'aussi bien un tel premier passage peut rendre impropre la tôle ainsi courbée, nécessitant la mise en œuvre d'une nouvelle tôle.

Une autre solution pour tenter de remédier à ce problème du retour élastique consiste à réaliser un étalonnage du matériau constitutif de la tôle, c'est-à-dire, à une correction prétraitement, permettant de prédire la courbure résultant du passage de la tôle dans la rouleuse. Pour ce faire, la commande numérique dont est munie la rouleuse définit automatiquement un certain nombre de positions d'étalonnage de la tôle en question, fonction des caractéristiques du matériau qui la constitue (épaisseur, limite élastique, largeur du matériau) et générées à partir d'un algorithme spécifique. L'utilisateur doit ensuite utiliser une tôle de la matière à étalonner et effectuer des roulages successifs à chaque position d'étalonnage donnée. Après renseignement des diamètres mesurés à chaque étape, la commande numérique de la rouleuse calcule par régression, par exemple carrée, les positions corrigées permettant de rouler tout diamètre.

Les inconvénients de cette correction prétraitement sont sensiblement identiques à ceux générés par les corrections postérieures, à savoir que cette correction est chronophage et qu'elle engendre un surcoût matière car elle implique de sacrifier une tôle pour chaque matériau voire lot de matière que l'on roule. Le document EP 2 332 666 A1 divulgue une rouleuse à trois rouleaux avec positionnement des deux rouleaux supérieurs. Le document EP 0 227 870 A1 divulgue une machine à commande automatique à rouler les tôles comprenant au moins deux rouleaux centraux.

Le procédé conforme à l'invention s'inscrit dans l'objectif d'une correction prétraitement, tout en s'affranchissant de l'étalonnage mentionné précédemment.

Ce procédé repose en effet sur le principe de l'obtention d'un certain nombre de coefficients identifiant la simulation du matériau, en fonction d'un certain nombre de paramètres prédéfinis, permettant de prédire le retour élastique de la tôle après roulage dans la rouleuse en fonction du nombre de passages de ladite tôle dans la rouleuse.

**EXPOSE DE L'INVENTION**

Ainsi donc, l'invention propose un procédé pour déterminer le nombre de passages ainsi que les positionnements successifs des deux rouleaux inférieurs par rapport au rouleau supérieur central fixe d'une rouleuse à trois rouleaux en fonction du rayon de courbure souhaité, de la nature et de l'épaisseur d'une tôle métallique à cintrer, afin d'obtenir ledit rayon de courbure. Elle concerne également la réciproque, c'est-à-dire un procédé permettant de déterminer le rayon de cintrage ou diamètre de roulage d'une tôle métallique en fonction de la nature et de l'épaisseur de la tôle, après passage dans une rouleuse à trois rouleaux, dont les diamètres sont connus, et dont le positionnement des rouleaux inférieurs est également connu, le rouleau supérieur central étant fixe.

Ce procédé consiste :

- à générer une table de simulation par éléments finis en fonction des caractéristiques de la rouleuse, de la limite élastique du matériau constitutif de la tôle à cintrer, et de l'épaisseur de ladite tôle, ce pour un nombre déterminé de positions des rouleaux inférieurs, permettant de définir le diamètre roulé de la tôle pour chacune desdites positions ;

- puis, à introduire au sein d'une unité de traitement et de commande de ladite rouleuse à trois rouleaux, parmi les paramètres de réglage de la rouleuse, le positionnement des rouleaux inférieurs résultant de cette table après traitement mathématique, notamment par régression de la fonction D = f(p), dans laquelle D désigne le diamètre roulé de la tôle et p le positionnement des rouleaux inférieurs, afin de définir pour l'ultime passage de la tôle considérée dans la rouleuse, le rayon de courbure souhaité de la tôle.

En d'autres termes, l'invention consiste en premier lieu à réaliser une table de simulation du comportement d'une tôle considérée (matériau et épaisseur) pour différentes positions des rouleaux inférieurs d'une rouleuse à trois rouleaux, cette table de simulation permettant alors de connaître pour différents types de tôle, généralement d'épaisseur connue et dont on connaît également le matériau constitutif, le positionnement des rouleaux inférieurs de la rouleuse.

Puis en second lieu, à traiter par régression, notamment linéaire, carrée et/ou exponentielle les éléments résultant de cette table de simulation, afin d'aboutir, soit au positionnement des rouleaux inférieurs en vue d'obtenir le rayon de courbure souhaitée de la tôle considérée lors de son ultime passage dans la rouleuse, soit de connaître le rayon de courbure de ladite tôle lors de son dernier passage dans la rouleuse pour un positionnement déterminé des rouleaux inférieurs.

S'agissant des caractéristiques du matériau, celles-ci sont connues, notamment en termes d'élasticité (module d'Young), pour chaque matériau mis en œuvre, en l'espèce, acier (tout type d'acier), acier inoxydable, aluminium, etc...

S'agissant des caractéristiques inhérentes à la rouleuse proprement dite, celles-ci sont également connues puisqu'il s'agit essentiellement du diamètre des rouleaux, de leur entraxe respectif et des possibilités de déplacement relatif des rouleaux inférieurs par rapport au rouleau supérieur fixe, et notamment un déplacement linéaire ou curviligne. En d'autres termes, on dispose d'une table de simulation par rouleuse considérée. Le nombre de types de ces rouleuses étant relativement restreint, le nombre de tables est lui-même limité. L'invention est définie par les revendications annexées.

## BREVE DESCRIPTION DES FIGURES

La manière dont l'invention peut être réalisée et les avantages qui en découlent, ressortiront mieux de la description qui suit, donnée à titre indicatif et non limitatif à l'appui des figures annexées.

La figure 1 est une représentation schématique en perspective d'une rouleuse à trois rouleaux.
La figure 2 est une vue schématique latérale de la rouleuse de la figure 1.
La figure 3 est une table d'étalonnage obtenue en fonction des caractéristiques intrinsèques du matériau, de l'épaisseur de la tôle et de la géométrie de la rouleuse.
La figure 4 est un tableau résultant de la simulation 3D obtenu à partir des données de la table de la figure 3.

## DESCRIPTION DETAILLEE DE L'INVENTION

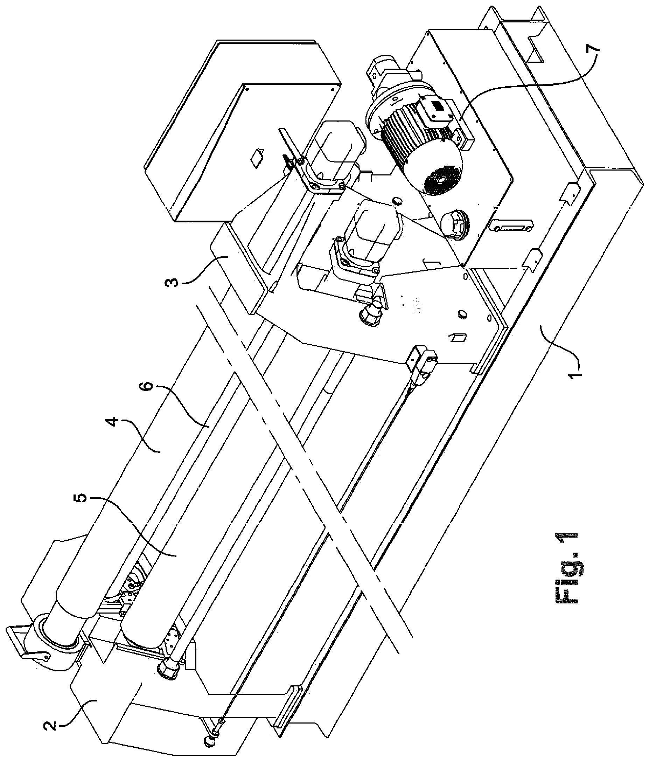

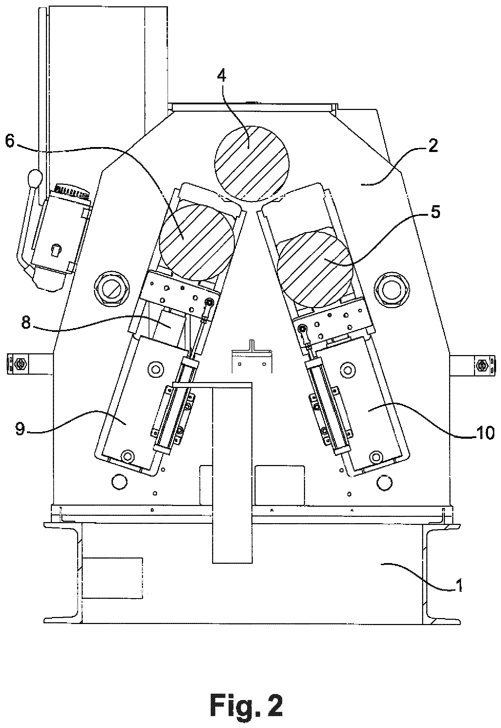

On a schématiquement représenté au sein des figures 1 et 2 une rouleuse à trois rouleaux, d'un type en soi connu. Fondamentalement, celle-ci se compose d'un châssis (1), reposant sur le sol, et muni de deux bâtis latéraux (2, 3) aptes à recevoir des paliers au sein desquels sont susceptibles de tourner les rouleaux destinés à assurer le cintrage d'une tôle métallique.

Le rouleau supérieur (4) est fixe, en ce sens que s'il est certes libre en rotation sur ses paliers, en revanche son positionnement au sein de la rouleuse demeure statique.

Par opposition, les deux rouleaux inférieurs (5, 6), sont susceptibles d'être mûs, linéairement ou selon un arc de cercle, selon la géométrie de rouleuse considérée, entre une position inférieure et une position supérieure, et ce par rapport au rouleau supérieur fixe (4), ce, afin de pouvoir faire varier le rayon de courbure de la tôle introduite entre le rouleau supérieur et les deux rouleaux inférieurs.

L'un au moins, et avantageusement les trois rouleaux sont moteurs, afin d'assurer la progression de la tôle au sein de la rouleuse.

Le déplacement des rouleaux inférieurs, et corollairement leur action sur la tôle en coopération avec le rouleau supérieur, résulte de l'action de pistons (8) associés chacun à un vérin hydraulique (9, 10).

Le procédé conforme à l'invention comporte différentes étapes :
Partant d'une tôle de matériau connu (et notamment sa limite élastique) et d'épaisseur également connue, on détermine le nombre de passages dans la rouleuse.

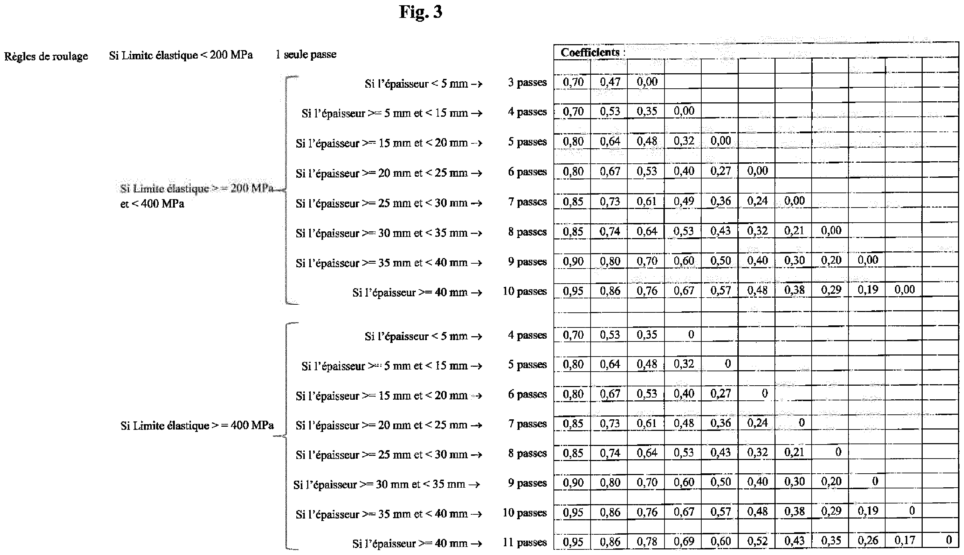

A cet effet, on établit, pour chaque rouleuse, une table d'étalonnage, telle qu'illustrée en figure 3. Cette table d'étalonnage va notamment tenir compte des caractéristiques de la rouleuse, et plus particulièrement du diamètre des trois rouleaux, outre la nature (linéaire ou circulaire) et la longueur de la course des rouleaux inférieurs.

De manière empirique, l'homme du métier connait, en fonction de la nature et de l'épaisseur de la tôle à cintrer, le nombre de passes nécessaires de la tôle au sein de la rouleuse afin d'aboutir au cintrage souhaité.

On observe ainsi, sur la partie gauche de la figure 3, cette détermination du nombre de passages, effectuée sur la base de l'expérience acquise du roulage par l'homme du métier.

Chaque coefficient de ladite table représente une fraction de la différence de positons de roulage extrêmes des rouleaux inférieurs de la rouleuse concernée.

Ainsi, pour une rouleuse ayant des rouleaux de diamètre D, on calcule :

- la position pmin permettant d'accéder au diamètre de roulage minimum 1.3*D, position mathématique limite, en dessous de laquelle on se place dans le domaine des solutions complexes ; et
- la position pmax permettant d'accéder à un diamètre de roulage maximum que l'on fixe arbitrairement à 9000 millimètres.

Les positions d'étalonnage sont ensuite obtenues en ajoutant à la position minimale pmin, le produit de la différence pmax-pmin par le coefficient correspondant.

En prenant pour exemple une rouleuse ayant des rouleaux de diamètre D = 170mm, les positions pmin et pmax sont respectivement 7 et 37. On obtient alors, pour un matériau d'épaisseur 2 millimètres et de limite élastique 235 MPa, les positions d'étalonnage suivantes :

$$7 + (37\text{-}7)*0.7 = 28$$

$$7 + (37\text{-}7)*0.47 = 21$$

$$7 + (37\text{-}7)*0 = 7$$

Ces coefficients sont déterminés, non seulement en fonction du nombre de passes attendu de la tôle dans la rouleuse, mais également en fonction du nombre de déformations de ladite tôle balayant la plage de cintrage, avec notamment une première position apte à engendrer une déformation suffisante de la tôle pour dépasser la limite élastique de cette dernière, et une dernière position qui demeure dans les capacités mécaniques de la rouleuse.

On génère ainsi les positions d'étalonnage desdits rouleaux.

Fort de ces positions, il est procédé à une simulation par éléments finis mettant en œuvre le modèle de la rouleuse et le matériau constitutif de la tôle à cintrer.

Ces simulations permettent de calculer les diamètres de roulage pour chaque position d'étalonnage calculée précédemment à l'aide de la table d'étalonnage de la figure 3.

Ces diamètres, de par la prise en compte des caractéristiques intrinsèques du matériau, prennent directement en compte le retour élastique dudit matériau.

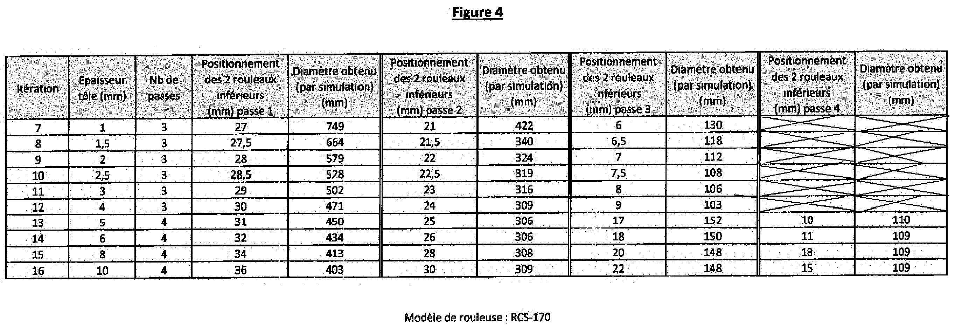

De la simulation par éléments finis, un tableau récapitulatif à l'image de celui représenté dans la figure 4 est obtenu.

Une fois ces diamètres explicités par la simulation par éléments finis, les autres positions atteignables par la rouleuse sont déterminés par extrapolation. Pour ce faire, divers traitements mathématiques peuvent être mis en œuvre.

Selon un premier traitement, on effectue une régression de type carré.

Ainsi, dans le cadre d'une rouleuse dont les caractéristiques sont les suivantes :

- diamètre du rouleau supérieur : 170 mm
- diamètre des rouleaux inférieurs : 170 mm
- entraxe pied de vérin : 529,7 mm
- ordonnée du point de position basse des rouleaux inférieurs : 445 mm
- hauteur rouleau supérieur : 633,2 mm c'est-à-dire ordonnée de l'axe de rotation du rouleau supérieur par rapport à un référentiel fixe constitué par le sol sur lequel repose la rouleuse ;
- course des rouleaux inférieurs : 80 mm
- angle de pression : 37,31 ° c'est-à-dire angle formé entre la droite joignant les axes de rotation du rouleau supérieur et du rouleau amont de la rouleuse par rapport à la verticale ;
- angle déplacement des vérins par rapport à la verticale : 18,0 °. et pour une tôle réalisée en acier de type S235, d'épaisseur 2mm, et dont les caractéristiques sont les suivantes :

- limite élastique (Re) : 235 MPa
- module d'élasticité : 20500 MPa
- résistance à la rupture : 340 MPa
- allongement à la rupture : 340 MPa

la simulation donne alors les résultats suivants :

| Résultats | | |
|---|---|---|
| Position rouleaux inférieurs p (mm) | Rayon (mm) | Diamètre D (mm) |
| 28 | 579 | 1157 |
| 22 | 324 | 650 |
| 7 | 112 | 223 |

Si l'on procède à une régression carrée de la courbe D = f(p) en résultant, on aboutit à l'équation suivante :

$$y = 2{,}6683 \, x^2 - 48{,}913x + 434{,}64$$

où y représente l'ordonnée, et en l'espèce le diamètre de cintrage, et x en abscisse, le positionnement des rouleaux inférieurs.

L'expérience démontre que pour les positionnements inférieurs des rouleaux, notamment en dessous de la position 20 millimètres, la courbe obtenue ne colle pas de manière optimum à la réalité.

De sorte qu'avantageusement, on choisit préférentiellement une double régression carrée et exponentielle, selon les développements suivants :

$$f_1(p) = ax^2 + bx + c$$

$$f_2(p) = d * \exp(f * g)$$

D'où la régression moyenne f peut être calculée :

$$f: p = \frac{f_1(p) + f_2(p)}{2} = \frac{ax^2 + bx + c + d * \exp(f * g)}{2}$$

où a, b, c, d et f sont des variables réelles, exp la fonction exponentielle, p la position des rouleaux inférieurs et $f_1$ et $f_2$ deux fonctions réelles à valeur dans l'ensemble des diamètres que peut rouler la rouleuse.

Cette fonction f permet ainsi de connaitre le diamètre roulé pour chaque position des rouleaux inférieurs.

Inversement, afin de déterminer les positions des rouleaux inférieurs en fonction d'un diamètre roulé de la tôle, on procède au calcul des bijections réciproques de chaque fonction de régression,

$$f_1^{-1}(r) = \frac{-b \pm \sqrt{b^2 - 4a(c - r)}}{2a}$$

$$f_2^{-1}(r) = \frac{1}{2f}\ln(\frac{r}{d})$$

Avant d'en exploiter une nouvelle fois la fonction moyenne g. g : [$r_{min}$ ; $r_{max}$] →[$p_{min}$ ; $p_{max}$]

$$g : r = \frac{f_1^{-1}(r) + f_2^{-1}(r)}{2} = \frac{-b \pm \sqrt{b^2 - 4a\,(c - r)}}{4a} + \frac{1}{4f}\ln(\frac{r}{d})$$

où r est le rayon à la fibre neutre de la tôle considérée que l'on souhaite rouler parmi $r_{min}$ et $r_{max}$ et $p_{min}$ et $p_{max}$ les positions extrêmes de roulage.

En utilisant la fonction g, il est donc possible de trouver les positions de roulage permettant de rouler quelque diamètre que ce soit.

On utilise donc les fonctions f ou g selon que l'on cherche un rayon de courbure à partir d'une position des rouleaux inférieurs, ou l'inverse.

Dans les faits, la courbe obtenue répond à l'équation suivante :

$$y = \tfrac{1}{2}\,(2{,}6683\,x^2 - 48{,}913x + 434{,}64 + 127{,}59^{E}0{,}0778)$$

Cette courbe reflète de manière beaucoup plus précise la réalité. Cette double régression est donc privilégiée.

Ces différents calculs sont réalisés à l'aide d'un logiciel dédié. Ce dernier est stocké dans la mémoire d'un PC, qui commande un automate ou une carte de commande, qui à son tour envoie les consignes de positionnement aux rouleaux inférieurs de la rouleuse.

Les données en résultant sont introduites dans une unité de traitement et de réglage de la rouleuse considérée, ladite unité étant associée à la rouleuse.

## Revendications

1. Procédé pour déterminer le nombre de passages ainsi que les positionnements successifs des deux rouleaux inférieurs (5, 6) par rapport au rouleau supérieur central fixe (4) d'une rouleuse à trois rouleaux en fonction du rayon de courbure souhaité, de la nature et de l'épaisseur d'une tôle à cintrer, afin d'obtenir ledit rayon de courbure, *caractérisé* **en ce qu'**il consiste :

   - à générer une table de simulation par éléments finis en fonction des caractéristiques de la rouleuse, de la limite élastique du matériau constitutif de la tôle à cintrer, et de l'épaisseur de ladite tôle, ce pour un nombre déterminé de positions des rouleaux inférieurs, permettant de définir le diamètre roulé de la tôle pour chacune desdites positions;
   - puis, à introduire au sein d'une unité de traitement et de commande de ladite rouleuse à trois rouleaux, parmi les paramètres de réglage de la rouleuse, le positionnement des rouleaux inférieurs résultant de cette table après traitement mathématique, notamment par régression de la fonction D = f(p), dans laquelle D désigne le diamètre roulé de la tôle et p le positionnement des rouleaux inférieurs (5, 6), afin de définir pour l'ultime passage de la tôle considérée dans la rouleuse, le rayon de courbure souhaité de la tôle.

2. Procédé pour déterminer le rayon de cintrage ou diamètre de roulage d'une tôle métallique en fonction de la nature et de l'épaisseur de la tôle, après passage dans une rouleuse à trois rouleaux, dont les diamètres sont connus, et dont le positionnement des rouleaux inférieurs (5, 6) est également connu, le rouleau supérieur central (4) étant fixe, *caractérisé* **en ce qu'**il consiste :

   - à générer une table de simulation par éléments finis en fonction des caractéristiques de la rouleuse, de la limite élastique du matériau constitutif de la tôle à cintrer, et de l'épaisseur de ladite tôle, ce pour un nombre déterminé de positions des rouleaux inférieurs, permettant de définir le diamètre roulé de la tôle pour chacune desdites positions;
   - puis, à introduire au sein d'une unité de traitement et de commande de ladite rouleuse à trois rouleaux, parmi les paramètres de réglage de la rouleuse, le positionnement des rouleaux inférieurs résultant de cette table après traitement mathématique, notamment par régression de la fonction D = f(p), dans laquelle D désigne le diamètre roulé de la tôle et p le positionnement des rouleaux inférieurs (5, 6), pour déterminer le rayon de courbure ou diamètre roulé simulé de ladite tôle après ultime passage de la tôle considérée dans la rouleuse en fonction du positionnement desdits rouleaux inférieurs.

3. Procédé pour déterminer le positionnement des deux rouleaux inférieurs (5, 6) par rapport au rouleau supérieur central fixe (4) d'une rouleuse à trois rouleaux selon la revendication 1, *caractérisé* **en ce que** le positionnement desdits rouleaux inférieurs (5, 6) pour obtenir le diamètre roulé ou rayon de courbure souhaité de ladite tôle est obtenu en opérant une régression carrée de la courbe D = f(p) résultant de la simulation par éléments finis, où D est le diamètre roulé de la tôle, et p le positionnement relatif des rouleaux inférieurs.

4. Procédé pour déterminer le positionnement des deux rouleaux inférieurs (5, 6) par rapport au rouleau supérieur central fixe (4) d'une rouleuse à trois rouleaux selon la revendication 1, *caractérisé* en ce que le positionnement desdits rouleaux inférieurs (5, 6) pour obtenir le diamètre roulé ou rayon de courbure souhaité de ladite tôle est obtenu en opérant une double régression carrée et exponentielle de la courbe D = f(p) résultant de la simulation par éléments finis, où D est le diamètre roulé de la tôle, et p le positionnement relatif des rouleaux inférieurs.

5. Procédé pour déterminer le rayon de cintrage ou diamètre de roulage d'une tôle métallique selon la revendication 2, *caractérisé* en ce que le diamètre roulé de ladite tôle pour chaque position des rouleaux déterminée par la table de simulation par éléments finis est obtenu en opérant une régression carrée de la courbe D = f(p) résultant de la simulation par éléments finis, où D est le diamètre roulé de la tôle, et p le positionnement relatif des rouleaux inférieurs.

6. Procédé pour déterminer le rayon de cintrage ou diamètre de roulage d'une tôle métallique selon la revendication 2, *caractérisé* en ce que le diamètre roulé de ladite tôle pour chaque position des rouleaux déterminée par la table de simulation par éléments finis est obtenu en opérant une double régression, l'une étant exponentielle, l'autre étant carrée de la courbe D = f(p) résultant de la simulation par éléments finis, où D est le diamètre roulé de la tôle, et p le positionnement relatif des rouleaux inférieurs.

**Patentansprüche**

1. Verfahren zur Bestimmung der Anzahl der Passagen sowie der aufeinanderfolgenden Positionen der beiden unteren Walzen (5, 6) in Beziehung zur oberen, zentralen, feststehenden Walze (4) einer Dreiwalzen- Walzmaschine, in Abhängigkeit vom gewünschten Krümmungsradius, der Art und der Dicke eines zu biegenden Blechs, um diesen Krümmungsradius zu erhalten, *dadurch gekennzeichnet, dass* es darin besteht:

   - eine Finite- Elemente- Simulationstabelle, in Abhängigkeit von den Eigenschaften der Walzmaschine, der Festigkeitsgrenze des Materials, aus dem das zu krümmende Blech besteht und der Dicke dieses Blechs zu erzeugen, und zwar für eine bestimmte Anzahl Positionen der unteren Walzen, wodurch es möglich wird, den gerollten Durchmesser des Blechs für jede dieser Positionen zu bestimmen;
   - dann, in eine Behandlungs- und Steuereinheit in dieser Drei- Walzen-Walzmaschine bei den Steuerungsparametern der Walzmaschine die Positionen der unteren Walzen einzuführen, wie sie sich aus dieser Tabelle ergeben, nach mathematischer Bearbeitung, insbesondere Regression der Funktion D = f(p), in der D den gerollten Durchmesser des Blechs bezeichnet und p die Positionierung der unteren Walzen (5, 6), um für die letzte Passage des jeweiligen Blechs durch die Walzmaschine, den gewünschten Krümmungsradius des Blechs zu bestimmen.

2. Verfahren zur Bestimmung des Biegeradius oder Rolldurchmessers eines Metallblechs, in Abhängigkeit von der Art und Dicke des Blechs, nach Passage durch eine Drei- Walzen- Walzmaschine, mit bekannten Durchmessern, und mit ebenfalls bekannter Positionierung der unteren Walzen (5, 6), die obere zentrale Walze (4) ist dabei feststehend, *dadurch gekennzeichnet, dass* es darin besteht:

   - eine Finite- Elemente- Simulationstabelle zu erzeugen, in Abhängigkeit von den Eigenschaften der Walzmaschine, der Festigkeitsgrenze des Materials, aus dem das zu krümmende Blech besteht und der Dicke dieses Blechs, und zwar für eine bestimmte Anzahl Positionen der unteren Rollen, wodurch es möglich wird, den gerollten Durchmesser des Blechs für jede dieser Positionen zu erzeugen;
   - dann in eine Behandlungs- und Steuereinheit in dieser Drei- Walzen-Walzmaschine, bei den Steuerungsparametern der Walzmaschine, die Positionen der unteren Walzen einzuführen, wie sie sich aus dieser Tabelle ergibt, nach mathematischer Bearbeitung, insbesondere durch Regression der Funktion D = f(p), in der D den gerollten Durchmesser des Blechs bezeichnet und p die Positionierung der unteren Walzen (5, 6), zur Bestimmung des Krümmungsradius oder des gerollten, simulierten Durchmessers diese Blechs nach der letzten Passage des jeweiligen Blechs durch die Walzmaschine, in Abhängigkeit von den Positionen der erwähnten unteren Walzen.

3. Verfahren zur Bestimmung der Positionierung der beiden unteren Walzen (5, 6), bezogen auf die obere, zentrale, feststehende Walze (4) einer Drei- Walzen-Walzmaschine nach Anspruch 1, *dadurch gekennzeichnet, dass* die Positionierung dieser unteren Walzen (5, 6) zum Erhalt des gewünschten Rolldurchmessers oder Krümmungsradius dieses Bleches, dadurch erreicht wird, dass eine quadratische Regression der Kurve 10 D f(p) durchgeführt wird, die sich aus der Finiten Elemente- Simulation ergibt, worin D der Rolldurchmesser des Blechs ist und p die relative Positionierung der unteren Walzen.

**4.** Verfahren zur Bestimmung der Positionierung der beiden unteren Walzen (5, 6), bezogen auf die obere, zentrale, feststehende Walze (4) einer Drei- Walzen-Walzmaschine nach Anspruch 1, *dadurch gekennzeichnet, dass* die Positionierung dieser unteren Walzen (5, 6) zum Erhalt des gewünschten Rolldurchmessers oder Krümmungsradius dieses Bleches, dadurch erreicht wird, dass eine quadratische und exponentielle Regression der Kurve 10 D f(p) durchgeführt wird, die sich aus der Finiten Elemente- Simulation ergibt, worin D der Rolldurchmesser des Blechs ist und p die relative Positionierung der unteren Walzen.

**5.** Verfahren zur Bestimmung des Biegeradius oder Rolldurchmessers eines Metallblechs nach Anspruch 2, *dadurch gekennzeichnet, dass* der Rolldurchmesser dieses Blechs für jede Position der Walzen, die durch die Finite Elemente-Simulationstabelle erhalten wird, sich dadurch ergibt, dass eine quadratische Regression der Kurve D f(p) durchgeführt wird, die sich aus der Finiten Elemente-Simulation ergibt, worin D der Rolldurchmesser des Blechs ist und p die relative Positionierung der unteren Walzen.

**6.** Verfahren zur Bestimmung des Biegeradius oder Rolldurchmessers eines Metallblechs nach Anspruch 2, *dadurch gekennzeichnet, dass* der Rolldurchmesser dieses Blechs für jede Position der Walzen, die durch die Finite Elemente-Simulationstabelle erhalten wird, sich dadurch ergibt, dass eine doppelte Regression, eine exponentiell, die andere quadratisch, der Kurve D f(p) durchgeführt wird, die sich aus der Finiten Elemente- Simulation ergibt, worin D der Rolldurchmesser des Blechs ist und p die relative Positionierung der unteren Walzen.

**Claims**

**1.** A method for determining the number of passes as well as the successive positionings of the two lower rolls (5, 6) with respect to the fixed upper central roll (4) of a three-roll roll bending machine according to the desired radius of curvature, the nature and the thickness of a sheet to be bent, in order to obtain said radius of curvature, **characterized in that** it consists of:

- generating a finite element simulation table according to the characteristics of the roll bending machine, the elastic limit of the constituent material of the sheet to be bent, and the thickness of said sheet, this for a determined number of positions of the lower rolls, enabling one to define the roll bent diameter of the sheet for each of said positions;
- then, introducing within a processing and control unit of said three-roll roll bending machine, from among the adjustment parameters of the roll bending machine, the positioning of the lower rolls resulting from this table after mathematical treatment, in particular by regression of the function D = f(p), in which D denotes the roll bent diameter of the sheet and p denotes the positioning of the lower rolls (5, 6), in order to define, for the final pass of the given sheet in the roll bending machine, the desired radius of curvature of the sheet.

**2.** A method for determining the bending radius or roll bending diameter of a metal sheet according to the nature and the thickness of the sheet, after passage in a roll bending machine with three rolls, the diameters of which are known and the positioning of the lower rolls (5, 6) of which is also known, the upper central roll (4) being fixed, **characterized in that** it consists of:

- generating a finite element simulation table according to the characteristics of the roll bending machine, the elastic limit of the constituent material of the sheet to be bent, and the thickness of said sheet, this for a determined number of positions of the lower rolls, enabling one to define the roll bent diameter of the sheet for each of said positions;
- then, introducing within a processing and control unit of said three-roll roll bending machine, from among the adjustment parameters of the roll bending machine, the positioning of the lower rolls resulting from this table after mathematical treatment, in particular by regression of the function D = f(p), in which D denotes the roll bent diameter of the sheet and p denotes the positioning of the lower rolls (5, 6), in order to determine the radius of curvature or roll bent diameter of said sheet after the final pass of the given sheet in the roll bending machine according to the positioning of said lower rolls.

3. The method for determining the positioning of the two lower rolls (5, 6) with respect to the fixed upper central roll (4) of a three-roll roll bending machine according to claim 1, **characterized in that** the positioning of said lower rolls (5, 6) for obtaining the desired roll bent diameter or radius of curvature of said sheet is obtained by performing a square regression of the curve D = f(p) resulting from the finite element simulation, where D is the roll bent diameter of the sheet and p is the relative positioning of the lower rolls.

4. The method for determining the positioning of the two lower rolls (5, 6) with respect to the fixed upper central roll (4) of a three-roll roll bending machine according to claim 1, **characterized in that** the positioning of said lower rolls (5, 6) for obtaining the desired roll bent diameter or radius of curvature of said sheet is obtained by performing a double square and exponential regression of the curve D = f(p) resulting from the finite element simulation, where D is the roll bent diameter of the sheet and p is the relative positioning of the lower rolls.

5. The method for determining the bending radius or roll bending diameter of a metal sheet according to claim 2, **characterized in that** the roll bent diameter of said sheet for each position of the rolls determined by the finite element simulation tables is obtained by performing a square regression of the curve D = f(p) resulting from the finite element simulation, where D is the roll bent diameter of the sheet and p is the relative positioning of the lower rolls.

6. The method for determining the bending radius or roll bending diameter of a metal sheet according to claim 2, **characterized in that** the roll bent diameter of said sheet for each position of the rolls determined by the finite element simulation table is obtained by performing a double regression, one being exponential and the other being square, of the curve D = f(p) resulting from the finite element simulation, where D is the roll bent diameter of the sheet and p is the relative positioning of the lower rolls.

**Fig. 1**

Fig. 2

## Fig. 3

Règles de roulage    Si Limite élastique < 200 MPa    1 seule passe

EP 3 502 816 B1

**Coefficients :**

| Condition | | Passes | c1 | c2 | c3 | c4 | c5 | c6 | c7 | c8 | c9 | c10 | c11 |
|---|---|---|---|---|---|---|---|---|---|---|---|---|---|
| Si Limite élastique >= 200 MPa et < 400 MPa | Si l'épaisseur < 5 mm → | 3 passes | 0,70 | 0,47 | 0,00 | | | | | | | | |
| | Si l'épaisseur >= 5 mm et < 15 mm → | 4 passes | 0,70 | 0,53 | 0,35 | 0,00 | | | | | | | |
| | Si l'épaisseur >= 15 mm et < 20 mm → | 5 passes | 0,80 | 0,64 | 0,48 | 0,32 | 0,00 | | | | | | |
| | Si l'épaisseur >= 20 mm et < 25 mm → | 6 passes | 0,80 | 0,67 | 0,53 | 0,40 | 0,27 | 0,00 | | | | | |
| | Si l'épaisseur >= 25 mm et < 30 mm → | 7 passes | 0,85 | 0,73 | 0,61 | 0,49 | 0,36 | 0,24 | 0,00 | | | | |
| | Si l'épaisseur >= 30 mm et < 35 mm → | 8 passes | 0,85 | 0,74 | 0,64 | 0,53 | 0,43 | 0,32 | 0,21 | 0,00 | | | |
| | Si l'épaisseur >= 35 mm et < 40 mm → | 9 passes | 0,90 | 0,80 | 0,70 | 0,60 | 0,50 | 0,40 | 0,30 | 0,20 | 0,00 | | |
| | Si l'épaisseur >= 40 mm → | 10 passes | 0,95 | 0,86 | 0,76 | 0,67 | 0,57 | 0,48 | 0,38 | 0,29 | 0,19 | 0,00 | |
| Si Limite élastique >= 400 MPa | Si l'épaisseur < 5 mm → | 4 passes | 0,70 | 0,53 | 0,35 | 0 | | | | | | | |
| | Si l'épaisseur >= 5 mm et < 15 mm → | 5 passes | 0,80 | 0,64 | 0,48 | 0,32 | 0 | | | | | | |
| | Si l'épaisseur >= 15 mm et < 20 mm → | 6 passes | 0,80 | 0,67 | 0,53 | 0,40 | 0,27 | 0 | | | | | |
| | Si l'épaisseur >= 20 mm et < 25 mm → | 7 passes | 0,85 | 0,73 | 0,61 | 0,48 | 0,36 | 0,24 | 0 | | | | |
| | Si l'épaisseur >= 25 mm et < 30 mm → | 8 passes | 0,85 | 0,74 | 0,64 | 0,53 | 0,43 | 0,32 | 0,21 | 0 | | | |
| | Si l'épaisseur >= 30 mm et < 35 mm → | 9 passes | 0,90 | 0,80 | 0,70 | 0,60 | 0,50 | 0,40 | 0,30 | 0,20 | 0 | | |
| | Si l'épaisseur >= 35 mm et < 40 mm → | 10 passes | 0,95 | 0,86 | 0,76 | 0,67 | 0,57 | 0,48 | 0,38 | 0,29 | 0,19 | 0 | |
| | Si l'épaisseur >= 40 mm → | 11 passes | 0,95 | 0,86 | 0,78 | 0,69 | 0,60 | 0,52 | 0,43 | 0,35 | 0,26 | 0,17 | 0 |

**Figure 4**

| Itération | Epaisseur tôle (mm) | Nb de passes | Positionnement des 2 rouleaux inférieurs (mm) passe 1 | Diamètre obtenu (par simulation) (mm) | Positionnement des 2 rouleaux inférieurs (mm) passe 2 | Diamètre obtenu (par simulation) (mm) | Positionnement des 2 rouleaux inférieurs (mm) passe 3 | Diamètre obtenu (par simulation) (mm) | Positionnement des 2 rouleaux inférieurs (mm) passe 4 | Diamètre obtenu (par simulation) (mm) |
|---|---|---|---|---|---|---|---|---|---|---|
| 7 | 1 | 3 | 27 | 749 | 21 | 422 | 6 | 130 | | |
| 8 | 1,5 | 3 | 27,5 | 664 | 21,5 | 340 | 6,5 | 118 | | |
| 9 | 2 | 3 | 28 | 579 | 22 | 324 | 7 | 112 | | |
| 10 | 2,5 | 3 | 28,5 | 528 | 22,5 | 319 | 7,5 | 108 | | |
| 11 | 3 | 3 | 29 | 502 | 23 | 316 | 8 | 106 | | |
| 12 | 4 | 3 | 30 | 471 | 24 | 309 | 9 | 103 | | |
| 13 | 5 | 4 | 31 | 450 | 25 | 306 | 17 | 152 | 10 | 110 |
| 14 | 6 | 4 | 32 | 434 | 26 | 306 | 18 | 150 | 11 | 109 |
| 15 | 8 | 4 | 34 | 413 | 28 | 308 | 20 | 148 | 13 | 109 |
| 16 | 10 | 4 | 36 | 403 | 30 | 309 | 22 | 148 | 15 | 109 |

Modèle de rouleuse : RCS-170

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2332666 A1

- EP 0227870 A1